# FASCICULE DE BREVET EUROPEEN

(11) **EP 0 434 520 B1**
(45) Date de publication et mention de la délivrance du brevet: **02.11.1994**
(21) Numéro de dépôt: 90403591.2
(22) Date de dépôt: 14.12.1990
(51) Int. Cl.: C05F 17/02

(54) **Réceptacle à humus**
Behälter zur Humusherstellung
Receptacle for making humus

(30) Priorité: 18.12.1989 FR 8916694
(43) Date de publication de la demande: 26.06.1991
(73) Titulaire: Losfeld, Guy, F-59830 Cysoing (FR)
(72) Inventeur: Losfeld, Guy, F-59830 Cysoing (FR)

(56) Documents cités:
- DE-A- 1 559 202
- DE-A- 2 007 755
- DE-A- 2 061 859
- DE-A- 2 842 876
- DE-A- 2 947 297
- FR-A- 2 555 013
- GB-A- 1 252 644
- GB-A- 1 427 331

## Description

Dans le domaine des équipements de jardin, on connaît des réceptacles à déchets végétaux, en particulier des fosses et des silos.

Ces déchets, comprenant les herbes tondues et les feuilles ramassées, sont généralement trop volumineux pour être pris par les services de ramassage des ordures. Leur brûlage est souvent interdit. Mis en tas, leur destruction naturelle par décomposition est aléatoire, et le tas s'étale sous l'action des éléments : vent, pluie etc.

Les fosses de jardin, qui évitent l'étalement des déchets, présentent des inconvénients : creusement profond à effectuer, danger de chute des personnes, envol des feuilles sous l'effet du vent au sol et recouvrement de l'humus en formation par les nouveaux déchets.

Il existe des fabrication dénommées "silos à compost", qui sont destinées à recevoir des déchets végétaux de jardin, et qui sont constituées d'éléments rigides à monter soi-même : panneaux ou barrières.

Ces silos ont l'inconvénient d'être très coûteux et très encombrants au transport; en outre, ils ont une faible contenance et ils sont peu efficaces en production d'humus.

Il existe également des dispositifs comportant une enveloppe non rigide.

Ainsi, le brevet DE.A.1559202 (B.KLEINHAMMER) a décrit une enveloppe qui est fixée à une armature complexe, à la fois interne et externe.

Le brevet DE.A.2061859 (H.BOGON) a décrit une enveloppe tronconique qui est suspendue à la structure circulaire d'une armature externe.

Le présente invention supprime tous ces inconvénients.

L'invention est décrite ci-après de façon préférentielle et non limitative.

Le réceptacle à déchets est constitué par un cylindre en tissu de fibres synthétiques, qui est maintenu verticalement par des piquets placés à l'intérieur du cylindre.

Ce cylindre est une virole souple qui comporte des liens attachés autour des piquets.

Chaque piquet d'armature est réalisé en éléments emboitables.

La virole comporte une extension faisant couvercle.

L'ensemble non monté se présente sous la forme d'un colis de faible encombrement et de faible poids.

Lors de la mise en place de la virole autour des piquets, la virole est au contact du sol et elle est plissée en accordéon.

Au fur et à mesure du remplissage en déchets végétaux, le bord supérieur de la virole est remonté volontairement jusqu'à la suppression complète des plis, par déplacement des attaches sur les piquets.

A la fin de la période de décomposition des déchets végétaux en masse, la virole est remontée volontairement par coulissement le long des piquets, de façon à dégager et à pouvoir prendre l'humus le plus ancien en partie basse.

Le volume ainsi dégagé en partie haute de la virole est alors disponible pour recevoir de nouveaux déchets.

Quand les déchets sont bien compacts et suffisamment avancés en décomposition, la virole peut être entièrement enlevée par le haut, la colonne d'humus étant laissée sur place. La virole et les armatures sont alors réutilisés ailleurs.

Le tissu de la virole constitue une toile aérée permettant les échanges gazeux et liquides qui favorisent la décomposition des déchets.

L'extension formant couvercle permet d'éviter le dessèchement et de limiter le refroidissement de la masse des déchets.

Enfin, le tissu est réalisé en fibres synthétiques ayant une bonne résistance chimique.

## Revendications

1. Réceptacle à déchets végétaux, permettant de produire de l'humus par la décomposition de ces déchets, caractérisé en ce qu'il est constitué par un cylindre souple et par une armature comprenant des éléments verticaux placés intérieurement contre ce cylindre, lequel après chargement, reste mobile le long de l'armature.

2. Réceptacle selon la revendication 1 caractérisé en ce que le cylindre, en coulissant vers le haut contre les éléments verticaux d'armature, dégage le contour de la partie basse de l'humus et vide la partie haute du cylindre, en permettant à la fois d'enlever cet humus en partie basse et de remplir la partie haute en déchets.

3. Réceptacle selon la revendication 1 caractérisé en ce que le cylindre est constitué par un tissu de fibres synthétiques, tissé de façon à permettre les échanges gazeux et liquides entre l'intérieur et l'extérieur du cylindre.

4. Réceptacle selon la revendication 1 caractérisé en ce que le cylindre comporte vers le haut une extension servant de rabat de fermeture.

5. Réceptacle selon la revendication 1 caractérisé en ce que le cylindre comporte des moyens pour l'attacher à un niveau quelconque des éléments verticaux d'armature, le cylindre étant à la fois plissable et coulissant.

6. Réceptacle selon la revendication 1 caractérisé en ce que l'armature comporte des éléments légers montés bout à bout.

## Claims

1. Receptacle for vegetal waste, enabling the production of humus through decomposition of waste. It is characterised by a flexible synthetic fibre mesh and a framework with vertical elements located inside and against the synthetic fibre mesh. The latter after loading, remains mobile along the framework.

2. Receptacle identical to claim 1, characterised by a synthetic fibre mesh sliding to the top, against the vertical elements of the framework, thus freeing the outline of the humus' lower part and emptying the upper part of the synthetic fibre mesh. While the lower part of the humus is being removed, waste is fed through the top of the synthetic fibre mesh.

3. Receptacle identical to claim 1, characterised by a synthetic fibre mesh made of synthetic fibre, woven so as to allow gaseous and liquid exchanges between the inner part and the outer part of the synthetic fibre mesh.

4. Receptacle identical to claim 1 characterised by a synthetic fibre mesh with an extension at the top acting as a closing flap.

5. Receptacle identical to claim 1, characterised by a synthetic fibre mesh with clips to fasten vertical components of the framework at a given level. The synthetic fibre mesh can both be folded and slid.

6. Receptacle identical to claim 1, characterised by a synthetic fibre mesh with a framework composed of light components assembled end to end.

## Patentansprüche

1. Behälter für pflanzliche Abfälle, der es ermöglicht, durch die Zersetzung dieser Abfälle Humus herzustellen, dadurch gekennzeichnet, daß er aus einem flexiblen Gehäuse und einem Gestänge besteht das senkrechte Elemente besitzt, die im Innern gegen das Gehäuse plaziert sind, das nach dem Auffüllen entlang des Gestänges mobil bleibt.

2. Behälter nach dem Anspruch 1, dadurch gekennzeichnet, daß das Gehäuse, wenn es nach oben gegen die senkrechten Elemente des Gestänges gleitet, den unteren Teils des Humus freilegt und der obere Teil sich leert, was es ermöglicht einerseits den Humus des unteren Teils abzunehmen und andererseits den oberen Teil mit Abfällen zu füllen.

3. Behälter nach dem Anspruch 1, dadurch gekennzeichnet, daß das Gehäuse aus synthetischen Fasern besteht, die so gewebt sind, daß ein Austausch der Gase und Flüssigkeiten zwischen der Innen- und Außenseite des Gehäuses stattfinden kann.

4. Behälter nach dem Anspruch 1, dadurch gekennzeichnet, daß das Gehäuse oben eine Ausweitung besitzt, die als Verschlußklappe dient.

5. Behälter nach dem Anspruch 1, dadurch gekennzeichnet, daß das Gehäuse Möglichkeiten besitzt, um an egal welcher Stelle der senkrechten Gestängeelemente angebracht zu werden, weil es sowohl faltbar als auch zusammenschiebbar ist.

6. Behälter nach dem Anspruch 1, dadurch gekennzeichnet, daß das Gestänge Leichtelemente besitzt, die End-zu-End zusammengesetz sind.
